# EUROPEAN PATENT APPLICATION

(11) **EP 4 266 454 A1**
(43) Date of publication of application: **25.10.2023**
(21) Application number: 22867552.6
(22) Date of filing: 22.07.2022
(51) Int. Cl.: H01M 10/54, H01M 4/525, H01M 4/505, H01M 4/36, C22B 7/00, C22B 3/00, C22B 47/00, C01G 53/00, H01M 4/62

(54) **METHOD FOR RECYCLING CATHODE ACTIVE MATERIAL AND CATHODE ACTIVE MATERIAL RECYCLED THEREFROM**

(30) Priority: 09.09.2021 KR 20210120485
(71) Applicant: LG Energy Solution, Ltd., Seoul 07335 (KR)
(72) Inventor: PARK, Se Ho, Daejeon 34122 (KR); SEO, Yongsik, Daejeon 34122 (KR); YANG, Doo Kyung, Daejeon 34122 (KR); KIM, Min Seo, Daejeon 34122 (KR); LEE, Jeongbae, Daejeon 34122 (KR); SEONG, Eunkyu, Daejeon 34122 (KR)
(74) Representative: Hoffmann Eitle
(86) International application number: PCT/KR2022/010773
(87) International publication number: WO 2023/038283

(57) **Abstract**

The present invention relates to a method of recycling a positive electrode active material and a recycled positive electrode active material prepared by the same. More particularly, the present invention relates to a method of recycling a positive electrode active material, the method including step A of recovering a positive electrode active material by heat-treating a waste positive electrode including a current collector and a positive electrode active material layer coated thereon at 300 to 650 °C in air; step B of precipitating the recovered positive electrode active material in a basic aqueous lithium compound solution for 10 to 40 minutes; step C of removing a supernatant after the precipitation step and obtaining a precipitate; and step D of adding a lithium precursor to the obtained precipitate and performing annealing at 400 to 1,000 °C in air and a recycled positive electrode active material prepared by the method.

The present invention has an effect of providing a method of recycling a positive electrode active material, the method being capable of greatly improving the rate performance of a battery by removing fine powder generated from a recycled positive electrode active material; being capable of achieving eco-friendliness by not using acids, and thus reducing process costs by eliminating the need for neutralization and wastewater treatment processes; being capable of preventing loss of metal elements by recycling a positive electrode active material in an intact state without decomposing the positive electrode active material; being capable of recovering a current collector by not dissolving the current collector; being capable of preventing generation of toxic gases or explosion by not using organic solvents; and being suitable for mass production by using an easy-to-manage process such as heat treatment or precipitation and a recycled positive electrode active material having excellent electrochemical performance, resistance properties, and capacity properties prepared by the method.

## Description

### [Technical Field]

### [Cross-Reference to Related Application]

This application claims priority to Korean Patent Application No. 10-2021-0120485, filed on September 09, 2021, in the Korean Intellectual Property Office, the disclosure of which is incorporated herein by reference.

The present invention relates to a method of recycling a positive electrode active material and a recycled positive electrode active material prepared by the same. More particularly, the present invention relates to a method of recycling a positive electrode active material, the method being capable of greatly improving the rate performance of a battery by removing fine powder generated from a recycled positive electrode active material; being capable of achieving eco-friendliness by not using acids, and thus reducing process costs by eliminating the need for neutralization and wastewater treatment processes; being capable of preventing loss of metal elements by recycling a positive electrode active material in an intact state without decomposing the positive electrode active material; being capable of recovering a current collector by not dissolving the current collector; being capable of preventing generation of toxic gases or explosion by not using organic solvents; and being suitable for mass production by using an easy-to-manage process such as heat treatment or precipitation and a recycled positive electrode active material having excellent electrochemical performance, resistance properties, and capacity properties prepared by the method.

### [Background Art]

In general, a lithium secondary battery consists of a positive electrode formed by coating a metal foil such as aluminum with a positive electrode active material layer, an anode formed by coating a metal foil such as copper with an anode active material layer, a separator for preventing the positive electrode and the anode from mixing, an electrolyte located between the positive electrode and the anode to allow lithium ions to flow, and the like.

In the positive electrode active material layer, a lithium-based oxide is mainly used as an active material. In the anode active material layer, a carbon material is mainly used as an active material. In general, the lithium-based oxide contains a rare metal such as cobalt, nickel, or manganese. Accordingly, studies on recovery and recycling of rare metals from the positive electrodes of lithium secondary batteries that are discarded after use or positive electrode scraps (hereinafter referred to as "waste positive electrodes") generated when manufacturing lithium secondary batteries are being actively conducted.

According to the related art for recovering rare metals from a waste positive electrode, after dissolving a waste positive electrode using hydrochloric acid, sulfuric acid, or nitric acid, cobalt, manganese, nickel, etc. are extracted using an organic solvent, and then the extracted metals are used as raw materials for synthesizing a positive electrode active material.

However, in the case of the method of extracting rare metals using an acid, a neutralization process and a wastewater treatment process are necessarily required due to the problem of environmental pollution, which greatly increases process costs. In addition, lithium, which is the main metal of a positive electrode active material, cannot be recovered by the above method.

To solve these drawbacks, a method (direct recycling method) of directly recycling a positive electrode active material from a waste positive electrode without decomposing the positive electrode active material is being studied. As such a method, there are mainly four methods such as calcination, solvent dissolution, aluminum (Al) foil dissolution, and crushing & screening.

The calcination method is a simple process, but has disadvantages such as generation of foreign substances on the surface of a recycled positive electrode active material, generation of waste gas, and excessive energy consumption.

In addition, when using the solvent dissolution method, a recycled positive electrode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are generated on the surface of a recycled positive electrode active material, and there is a risk of explosion due to hydrogen gas generated in a process of removing aluminum foil.

In addition, the crushing & screening method may be performed through the simplest process among the above methods. However, it is difficult to completely separate a current collector and a positive electrode active material, the particle size distribution of the positive electrode active material is changed during a crushing process, and the battery characteristics of the recycled positive electrode active material are deteriorated due to a residual binder.

Therefore, there is an urgent need to develop a method of safely recycling a positive electrode active material having improved rate performance in an environment-friendly manner at a low cost without loss of metal elements from a waste positive electrode.

### [Disclosure]

### [Technical Problem]

Therefore, the present invention has been made in view of the above problems, and it is one object of the present invention to provide a method of recycling a positive electrode active material, the method being capable of greatly improving the rate performance of a battery by removing fine powder generated from a recycled positive electrode active material; being capable of achieving eco-friendliness by not using acids, and thus reducing process costs by eliminating the need for neutralization and wastewater treatment processes; being capable of preventing loss of metal elements by recycling a positive electrode active material in an intact state without decomposing the positive electrode active material; being capable of recovering a current collector by not dissolving the current collector; being capable of preventing generation of toxic gases or explosion by not using organic solvents; and being suitable for mass production by using an easy-to-manage process such as heat treatment or precipitation.

It is another object of the present invention to provide a positive electrode active material having excellent electrochemical performance, resistance properties, and capacity properties.

The above and other objects can be accomplished by the present invention described below.

### [Technical Solution]

(I) In accordance with one aspect of the present invention, provided is a method of recycling a positive electrode active material, the method including step A of recovering a positive electrode active material by heat-treating a waste positive electrode including a current collector and a positive electrode active material layer coated thereon at 300 to 650 °C in air; step B of precipitating the recovered positive electrode active material in a basic aqueous lithium compound solution for 10 to 40 minutes; step C of removing a supernatant after the precipitation step and obtaining a precipitate; and step D of adding a lithium precursor to the precipitate and performing annealing at 400 to 1,000 °C in air.
(II) According to (I), the positive electrode active material layer of step A may include preferably a positive electrode active material, a binder, and a conductive material.
(III) According to (I) or (II), the positive electrode active material may be preferably a compound represented by Chemical Formula 1 below:

   [Chemical Formula 1] LiₐNiₓMn_{y}Co_{z}M_{w}O_{2+δ},

   wherein M includes one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, and x+y+z+w=1.
   In step B, the positive electrode active material may be preferably precipitated by adding 0.1 to 100 g of the positive electrode active material per 100 ml of the basic aqueous lithium compound solution.
(IV) According to (I) to (III), the basic aqueous lithium compound solution of step B may include preferably a basic lithium compound in an amount of greater than 0 % by weight and less than or equal to 15 % by weight.
(V) According to (I) to (IV), in step B, before the recovered positive electrode active material is precipitated, the recovered positive electrode active material and the basic aqueous lithium compound solution may be preferably stirred to wash the recovered positive electrode active material.
(VI) According to (I) to (V), the stirring may be preferably performed within a week.
(VII) According to (I) to (VI), a particle size distribution of the precipitate of step C may exhibit preferably a bimodal or multimodal pattern, wherein, in the multimodal pattern, a peak corresponding to a small-sized particle is lower than a peak corresponding to a large-sized particle.
(VIII) According to (I) to (VII), in the precipitate of step C, a total amount of particles having a particle size of 1 µm or less may be preferably 5 % by volume or less.
(IX) According to (I) to (VIII), step C may include preferably a step of drying the obtained precipitate.
(X) According to (I) or (IX), the lithium precursor of step D may include preferably one or more selected from the group consisting of LiOH, Li₂CO₃, LiNO₃, and Li₂O.
(XI) According to (I) to (X), the lithium precursor of step D may be preferably added in an amount corresponding to a difference in lithium content between a molar ratio of lithium in the positive electrode active material of step A and a molar ratio of lithium in the precipitate in which an amount of lithium is reduced.
(XII) According to (I) to (XI), the lithium precursor of step D may be preferably added in an amount capable of providing 1 to 40 mol% of lithium based on 100 mol% in total of lithium in the positive electrode active material of step A.
(XIII) According to (I) to (XII), in step D, the annealing temperature may be preferably a temperature exceeding a melting point of the lithium precursor.
(XIV) According to (I) to (XIII), the method may include preferably step F of coating the annealed precipitate of step D with a coating agent containing metals or carbon, and then heat-treating the precipitate at 100 to 1,200 °C.
(XV) In accordance with another aspect of the present invention, provided is a recycled positive electrode active material prepared by the method of recycling a positive electrode active material.
(XVI) In accordance with yet another aspect of the present invention, provided is a recycled positive electrode active material including a compound represented by Chemical Formula 1 below:

   [Chemical Formula 1] LiₐNiₓMn_{y}Co_{z}M_{w}O_{2+δ},

   wherein M includes one or more selected from the group consisting of B, W, Al, Ti, and Mg; 1<a≤1.1, 0<x<0.95, 0<y<0.8, 0<z<1.0, 0≤w≤0.1, -0.02≤δ≤0.02, and x+y+z+w=1; a particle size distribution of the recycled positive electrode active material exhibits a bimodal or multimodal pattern, wherein, in the multimodal pattern, a peak corresponding to a small-sized particle is lower than a peak corresponding to a large-sized particle; and a content of fluorine (F) is 5,000 ppm or less.
(XVII) According to (XVI), the recycled positive electrode active material may have preferably a surface coated with a coating agent containing metals or carbon.

### [Advantageous effects]

The present invention has an effect of providing a method of recycling a positive electrode active material, the method being capable of greatly improving the rate performance of a battery by removing fine powder generated from a recycled positive electrode active material; being capable of achieving eco-friendliness by not using acids, and thus reducing process costs by eliminating the need for neutralization and wastewater treatment processes; being capable of preventing loss of metal elements by recycling a positive electrode active material in an intact state without decomposing the positive electrode active material; being capable of recovering a current collector by not dissolving the current collector; being capable of preventing generation of toxic gases or explosion by not using organic solvents; and being suitable for mass production by using an easy-to-manage process such as heat treatment or precipitation and a recycled positive electrode active material having excellent electrochemical performance, resistance properties, and capacity properties prepared by the method.

### [Description of Drawings]

The following drawings attached to the present specification illustrate embodiments of the present invention, and are intended to further understand the technical spirit of the present invention together with the detailed description to be described later, so the present invention is not limited to these drawings.
FIG. 1 illustrates positive electrode scraps discarded after cutting an electrode plate from a positive electrode sheet.
FIG. 2 includes scanning electron microscope (SEM) images of recycled positive electrode active materials prepared in Example 1 (A), Comparative Example 1 (B), and Comparative Example 2 (C) and the positive electrode active material of Reference Example (D).
FIG. 3 is a graph showing the particle size distribution of precipitates or solids obtained after precipitation or washing in Example 1 and Comparative Examples 1 and 2.
FIG. 4 is a graph showing the result of comparing the particle size distribution of the recycled positive electrode active materials obtained after annealing in Example 1 and Comparative Examples 1 and 2 and the positive electrode active material of Reference Example (Reference NCM65).
FIG. 5 is a graph showing rate performance according to the number of cycles as a result of cell evaluation of the recycled positive electrode active materials prepared in Example 1 and Comparative Example 1 and the positive electrode active material of Reference Example (Reference NCM65).
FIG. 6 is a flowchart for explaining a process of recycling a positive electrode active material according to one embodiment of the present invention.

### [Best mode]

The present inventors confirmed that, while researching a method (direct recycling method) of directly recycling a positive electrode active material from a waste positive electrode without decomposing the positive electrode active material, when a calcination method was used to recover a positive electrode active material from positive electrode scraps generated in a process of manufacturing a lithium secondary battery, and then fine powder were removed by precipitating the positive electrode active material recovered in the reforming process in a basic aqueous solution for a predetermined time, the battery characteristics of the recycled positive electrode active material were greatly improved. Based on these results, the present inventors conducted further studies to complete the present invention.

Hereinafter, a method of recycling a positive electrode active material of the present invention and a recycled positive electrode active material prepared by the same will be described in detail.

The terms and words which are used in the present specification and the appended claims should not be construed as being confined to common meanings or dictionary meanings but should be construed as meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### Method of recycling positive electrode active material

A method of recycling a positive electrode active material according to the present invention includes step A of recovering a positive electrode active material by heat-treating a waste positive electrode including a current collector and a positive electrode active material layer coated thereon at 300 to 650 °C in air; step B of precipitating the recovered positive electrode active material in a basic aqueous lithium compound solution for 10 to 40 minutes; step C of removing a supernatant after the precipitation step and obtaining a precipitate; and step D of adding a lithium precursor to the obtained precipitate and performing annealing at 400 to 1,000 °C in air. In this case, the electrochemical performance, resistance properties, and capacity properties of the recycled positive electrode active material may be greatly improved. In addition, eco-friendliness may be achieved by not using acids, and thus process costs may be reduced by eliminating the need for neutralization and wastewater treatment processes. In addition, loss of metal elements may be prevented by recycling a positive electrode active material in an intact state without decomposing the positive electrode active material, a current collector may be recovered by not dissolving the current collector, generation of toxic gases or explosion may be prevented by not using organic solvents, and mass production is possible by using an easy-to-manage process such as heat treatment or precipitation.

### (A) Recovering positive electrode active material from waste positive electrode

Step A of recovering a positive electrode active material from a waste positive electrode according to the present invention may be preferably a step of recovering a positive electrode active material by heat-treating a waste positive electrode including a current collector and a positive electrode active material layer coated thereon at 300 to 650 °C in air. In this case, binders, conductive materials, and current collectors may be completely removed by the simple process.

The waste positive electrode may be a positive electrode detached from a lithium secondary battery discarded after use or a defective positive electrode sheet or positive electrode scraps generated in a lithium secondary battery manufacturing process.

The positive electrode active material layer of step A may include preferably a positive electrode active material, a binder, and a conductive material.

The positive electrode active material may be preferably a compound represented by Chemical Formula 1 below.

[Chemical Formula 1] LiₐNiₓMn_{y}Co_{z}M_{w}O_{2+δ}

In Chemical Formula 1, M includes one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, and x+y+z+w=1.

As a more specific example, the positive electrode active material may include one or more selected from the group consisting of lithium cobalt oxide such as LiCoO₂ (hereinafter referred to as "LCO"); lithium manganese oxide such as LiMnO₂ or LiMn₂O₄; a lithium iron phosphate compound such as LiFePO₄; lithium nickel oxide such as LiNiO₂; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide, more preferably a nickel manganese-based lithium composite metal oxide, an NCM-based lithium composite transition metal oxide, or a mixture thereof. In this case, reversible capacity and thermal stability may be excellent.

For example, the conductive material may be a carbon-based conductive material, preferably carbon black, CNT, or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

The heat treatment temperature may be preferably 400 to 600 °C, more preferably 500 to 600 °C, still more preferably 530 to 580 °C. Within this range, since a current collector is not melted and only a binder is removed, a positive electrode active material may be easily separated from the current collector.

The heat treatment time may be preferably 10 minutes to 5 hours, more preferably 30 minutes to 5 hours, still more preferably 30 minutes to 2 hours, still more preferably 30 minutes to 1 hour. Within this range, since a current collector is not melted and only a binder is removed, a positive electrode active material may be easily separated from the current collector.

In the present disclosure, the heat treatment time is time of heat treatment performed at the heat treatment temperature, and does not include time required to reach the heat treatment temperature.

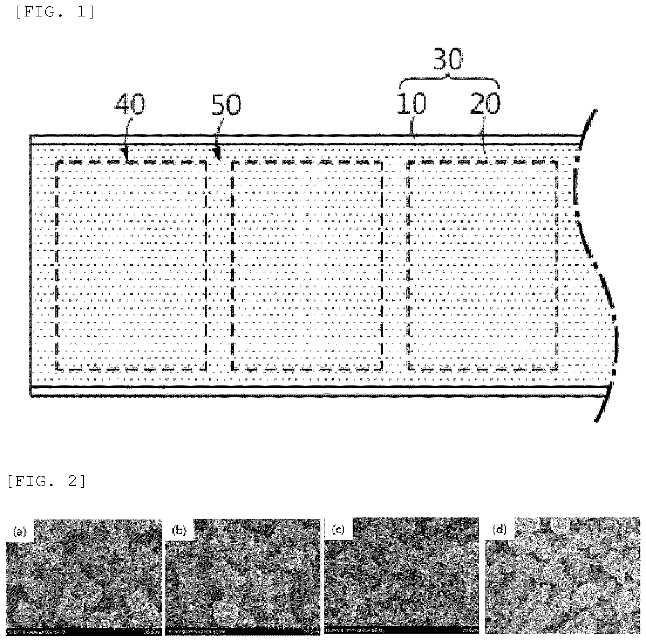

FIG. 1 below illustrates positive electrode scraps discarded after cutting an electrode plate from a positive electrode sheet.

Referring to FIG. 1, aluminum foil 10, which is a long sheet-shaped positive electrode current collector, is coated with a positive electrode active material layer 20 including a positive electrode active material, a conductive material, and a binder to obtain a positive electrode sheet 30. Then, a positive electrode plate 40 is obtained by blanking the positive electrode sheet 30 to a certain size. At this time, portions remaining after the blanking are positive electrode scraps 50. The blanking is a means for cutting the positive electrode sheet.

In addition, the positive electrode active material layer 20 is formed by coating the aluminum foil 10 with slurry obtained by mixing a positive electrode active material, a conductive material, a binder, and a solvent. Since the slurry is very sensitive to environmental factors such as temperature, it is very difficult to determine the coating conditions. Accordingly, waste positive electrode sheets are generated until the conditions for manufacturing the positive electrode sheet 30 of desired quality are determined through a predetermined test.

For reference, in the following examples, positive electrode scraps were used as a waste positive electrode.

### (B) Precipitating positive electrode active material in basic aqueous solution

Step B of precipitating a positive electrode active material in a basic aqueous solution according to the present invention may be preferably a step of precipitating a recovered positive electrode active material in a basic aqueous lithium compound solution for 10 to 40 minutes. In this case, positive electrode active material particles of normal size may be sufficiently precipitated, and a positive electrode active material in a fine powder state may be suspended, so that the fine powder may be efficiently separated.

The precipitation time may be preferably 15 to 40 minutes, more preferably 20 to 40 minutes, still more preferably 20 to 35 minutes, still more preferably 20 to 30 minutes. Within this range, positive electrode active material particles of normal size may be sufficiently precipitated, and a positive electrode active material in a fine powder state may be suspended, so that the fine powder may be efficiently separated. In particular, when the recovered positive electrode active material is an NCM-based active material, precipitation may be easy.

Step B may be preferably a step of precipitating the positive electrode active material by adding 0.1 to 100 g of the positive electrode active material per 100 ml of the basic aqueous lithium compound solution, more preferably a step of precipitating the positive electrode active material by adding 0.1 to 50 g of the positive electrode active material per 100 ml of the basic aqueous lithium compound solution, still more preferably a step of precipitating the positive electrode active material by adding 0.1 to 10 g of the positive electrode active material per 100 ml of the basic aqueous lithium compound solution. Within this range, positive electrode active material particles of normal size may be sufficiently precipitated, and a positive electrode active material in a fine powder state may be suspended, so that the fine powder may be efficiently separated.

The basic aqueous lithium compound solution of step B may include a basic lithium compound preferably in an amount of greater than 0 % by weight and less than or equal to 15 % by weight, more preferably in an amount of greater than 0 % by weight and less than or equal to 10 % by weight. Within this range, positive electrode active material particles of normal size may be sufficiently precipitated, and a positive electrode active material in a fine powder state may be suspended, so that the fine powder may be efficiently separated.

Step B may include preferably step B-1 of, before precipitating the recovered positive electrode active material, stirring the recovered positive electrode active material in the basic aqueous lithium compound solution to wash the recovered positive electrode active material. In this case, the above step is a process of modifying the surface of the positive electrode active material, and, in this process, foreign substances such as metal fluorides (e.g., LiF) generated on the surface of the positive electrode active material in the previous heat treatment process may be removed.

For example, the stirring may be performed within a week, preferably within a day, more preferably for 1 hour or less, 40 minutes or less, 30 minutes or less, or 20 minutes or less, or may be performed, for example, for 5 minutes or more, preferably 10 minutes or more, 20 minutes or more, or 30 minutes or more. Within this range, all foreign substances such as metal fluorides (e.g., LiF) generated on the surface of the positive electrode active material may be removed, but excessive elution of lithium may not occur. Thus, the capacity properties of a battery may be excellent.

### (C) Removing supernatant and obtaining precipitate

Step C of removing a supernatant and obtaining a precipitate according to the present invention may be preferably a step of, after the precipitating, removing a supernatant to obtaining a precipitate.

The particle size distribution of the precipitate of step C preferably exhibits a bimodal or multimodal pattern. In this case, in the multimodal pattern, a peak corresponding to a small-sized particle may be lower than a peak corresponding to a large-sized particle. In this case, electrochemical performance, resistance properties, and capacity properties may be excellent, and the rate performance of a battery may be greatly improved.

The multimodal pattern may be preferably a bimodal or trimodal pattern, more preferably a bimodal pattern. In this case, electrochemical performance, resistance properties, and capacity properties may be excellent, and the rate performance of a battery may be greatly improved.

In the precipitate of step C, the total amount of particles having a particle size of 1 µm or less is preferably 5 % by volume or less, more preferably 3 % by volume or less, still more preferably 2 % by volume or less. Within this range, electrochemical performance, resistance properties, and capacity properties may be excellent, and the rate performance of a battery may be greatly improved.

In the present disclosure, particle size distribution-related numerical values such as particle size, particle size pattern, and volume % may be measured with a particle size analyzer commonly used or commercially available in the art to which the present invention pertains. As a specific example, a Horiba LA 950V2 particle size analyzer may be used.

In the present disclosure, the method of removing a supernatant may include a method of pouring or withdrawing a supernatant. As such, any method of removing a supernatant containing suspended fine powder may be used in the present invention without any particular limitation.

Step C may include preferably step C-1 of drying the obtained precipitate. In this case, a process of adding a lithium precursor may be optimized.

The drying may be performed at preferably 70 to 200 °C, more preferably 20 to 130 °C until there is no change in weight, for example, for 1 to 24 hours. Within this range, moisture contained in the precipitated active material may be effectively removed.

### (D) Adding lithium precursor to precipitate and performing annealing

Step D of adding the lithium precursor to the precipitate and performing annealing according to the present invention may be preferably a step of adding the lithium precursor to the precipitate and performing annealing at 400 to 1,000 °C in air. In this case, by improving crystallinity through increase in crystallinity or recovery of a crystal structure, the battery characteristics of a recycled positive electrode active material may be improved.

The lithium precursor of step D preferably includes one or more selected from the group consisting of LiOH, Li₂CO₃, LiNO₃, and Li₂O.

The lithium precursor of step D is preferably added in an amount corresponding to a difference in lithium content between a molar ratio of lithium in the positive electrode active material of step A and a molar ratio of lithium in the precipitate in which an amount of lithium is reduced, more preferably added in an amount corresponding to a molar ratio of 0.0001 to 0.2 of lithium based on a molar ratio of lithium in the positive electrode active material of step A. Within this range, insufficient lithium in the recycled positive electrode active material may be supplemented, and thus crystallinity may be increased or a crystal structure may be recovered, thereby improving crystallinity. As a result, the battery characteristics of the recycled positive electrode active material may be improved.

The lithium precursor of step D is added in preferably an amount capable of providing 1 to 40 mol% of lithium, more preferably an amount capable of providing 1 to 15 mol% of lithium, still more preferably an amount capable of providing 7 to 11 mol% of lithium based on 100 mol% in total of lithium in the positive electrode active material of step A. Within this range, since a residual precursor that causes an increase in the resistance of the recycled positive electrode active material is not left, battery characteristics may be improved.

The annealing temperature of step D may be adjusted within a limited range according to the melting point of the lithium precursor. For example, in the case of LiCO₃, the melting point thereof is 723 °C, and thus annealing may be performed at preferably 700 to 900 °C, more preferably 710 to 780 °C. In the case of LiOH, the melting point thereof is 462 °C, and thus annealing may be performed at preferably 400 to 600 °C, more preferably 450 to 480 °C. Within this range, a crystal structure may be recovered, and thus the rate performance of a battery may be excellent.

In step D, the annealing temperature is preferably a temperature exceeding the melting point of the lithium precursor. However, when the annealing temperature exceeds 1,000 °C, thermal decomposition of the positive electrode active material may occur, resulting in deterioration of battery performance.

### (E) Performing coating using coating agent and performing heat treatment

Step E of coating using a coating agent and performing heat treatment according to the present invention is an optional step, and may be preferably a step of coating the annealed precipitate of step D with a coating agent containing metals or carbon, and then heat-treating the precipitate at 100 to 1,200 °C. In this case, structural stability and electrochemical performance may be improved while maintaining the intrinsic properties of the positive electrode active material.

The coating agent containing metals may be preferably a coating agent containing one or more selected from the group consisting of B, W, Al, Ti, Mg, Ni, Co, Mn, Si, Zr, Ge, Sn, Cr, Fe, V, and Y, more preferably a coating agent containing one or more selected from the group consisting of B, W, Al, Ti, and Mg. In this case, metals other than lithium lost through a process of separating a current collector and a process of modifying the surface of a positive electrode active material may be replenished or a surface coating layer may be restored.

The heat treatment temperature may be preferably 100 to 1,000 °C, more preferably 200 to 1,000 °C, still more preferably 200 to 500 °C. Within this range, structural stability and electrochemical performance may be improved while maintaining the intrinsic properties of the positive electrode active material.

As a specific example, when the coating agent contains B, B-W, B-Ti, or B-W-Ti, the heat treatment temperature may be preferably 200 to 500 °C.

Based on 100 parts by weight in total of the positive electrode active material, the coating agent may be included in an amount of preferably 0.01 to 10 parts by weight, more preferably 0.1 to 1 part by weight. Within this range, structural stability and electrochemical performance may be improved while maintaining the intrinsic properties of the positive electrode active material.

The heat treatment time may be preferably 1 to 16 hours, more preferably 3 to 7 hours. Within this range, structural stability and electrochemical performance may be improved while maintaining the intrinsic properties of the positive electrode active material.

Coating methods commonly used in the art to which the present invention pertains may be used as the coating method of the present invention without particular limitation. For example, a liquid method of mixing a positive electrode active material and a liquid coating agent, a mechanochemical method using the high mechanical energy of ball milling, a fluid bed coating method, a spray drying method, a precipitation method of precipitating a coating agent onto the surface of an active material in an aqueous solution, a method using reaction between a vapor phase coating agent and a positive electrode active material, or sputtering may be used.

For example, the coating agent may have a spherical shape, a plate shape, a square shape, or a needle shape. For example, such a shape may be controlled by changing process conditions in the preparation process of the coating agent. The shape of the coating agent is not particularly limited as long as the shape follows a definition commonly accepted in the art to which the present invention pertains. The coating agent may have preferably an average diameter of 1 to 1,000 nm and a specific surface area of 10 to 100 m²/g, more preferably an average diameter of 10 to 100 nm and a specific surface area of 20 to 100 m²/g. Within this range, the coating agent may be uniformly adhered to the surface of the positive electrode active material, thereby improving the structural stability of the positive electrode active material. Thus, reduction of the lifespan of the positive electrode active material and degradation of the electrochemical performance thereof due to lattice deformation or collapse of a crystal structure may be prevented.

In the present disclosure, the average diameter may be measured by a measuring method commonly used in the art to which the present invention pertains. For example, the average diameter may be measured by a laser diffraction method. Specifically, positive electrode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D50) is calculated based on 50 % of the particle size distribution in the measuring device.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated from the amount of nitrogen gas adsorbed under liquid nitrogen temperature (77 K) using BELSORP-mino II manufactured by BEL Japan Co.

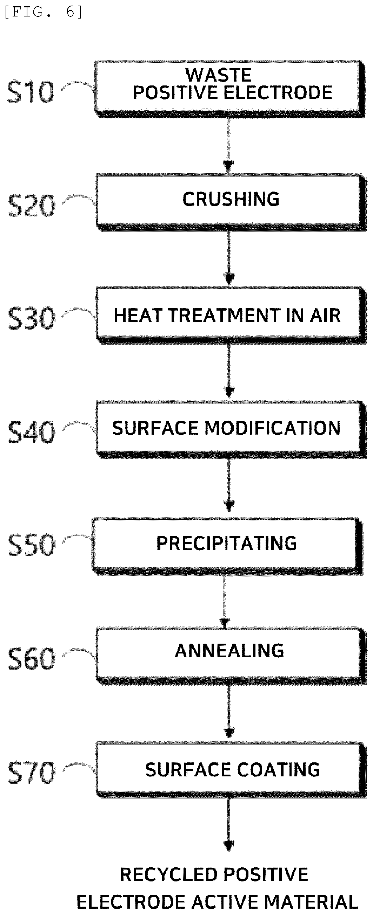

FIG. 6 below is a flowchart for explaining a process of recycling a positive electrode active material according to one embodiment of the present invention.

Referring to FIG. 6, First, positive electrode scraps are prepared (step S10). For example, slurry is obtained by adding N-methyl pyrrolidone (NMP) to an NCM-based lithium composite transition metal oxide, carbon black, and polyvinylidene fluoride and mixing these components. Then, aluminum foil is coated with the slurry and dried in a vacuum oven at about 120 °C to manufacture a positive electrode sheet. Then, a positive electrode plate is obtained by blanking the positive electrode sheet to a certain size. At this time, portions remaining after blanking are positive electrode scraps.

In the positive electrode scraps, a positive electrode active material layer is formed on aluminum foil. After a solvent is volatilized, the positive electrode active material layer has a structure in which a positive electrode active material and a conductive material are bonded by a binder. Accordingly, when the binder is removed, the positive electrode active material is separated from the aluminum foil.

Next, the prepared positive electrode scraps are crushed to an appropriate size (step S20). Here, the crushing involves cutting or shredding the positive electrode scraps into easy-to-handle sizes. As a specific example, the crushed positive electrode scraps may have a size of 1 cm × 1 cm. For example, the crushing may be performed using various dry crushing equipment such as a hand-mill, a pin-mill, a disk-mill, a cutting-mill, and a hammer-mill. In addition, to increase productivity, the crushing may be performed using a high-speed cutter.

Preferably, in consideration of equipment used in handling positive electrode scraps and subsequent processes, whether to perform the crushing, the size of the pieces, etc. may be determined. For example, when equipment capable of continuous processing is used, since high fluidity is required, positive electrode scraps must be crushed into small pieces.

Next, the positive electrode scraps are heat-treated in air (step S30). Here, the heat treatment is performed to thermally decompose a binder in an active material layer.

Through the heat treatment in air, the binder and the conductive material in the active material layer are thermally decomposed into CO₂ and H₂O and removed. Since the binder is removed, the active material may be separated from a current collector, and the separated active material in powder form may be easily selected. Accordingly, in step S30, the active material layer may be separated from the current collector, and the active material in the active material layer may be recovered in powder form.

The heat treatment should be performed in air. When the heat treatment is performed in a reducing gas or inert gas atmosphere, the binder and the conductive material are carbonized without being thermally decomposed. In this case, carbon components remain on the surface of the active material, and the performance of a recycled active material is deteriorated. However, when the heat treatment is performed in air, carbon components in the binder and the conductive material react with oxygen to generate gases such as CO and CO₂ and disappear. Thus, the binder and the conductive material may be completely removed.

The heat treatment is performed at preferably 300 to 650 °C, as a specific example, 550 °C. When the heat treatment is performed at a temperature of less than 300 °C, it is difficult to remove the binder, so the current collector may not be separated. When the heat treatment is performed at a temperature of exceeding 650 °C, since the current collector melts, the current collector may not be separated.

The heat treatment is performed at a temperature increasing rate of preferably 1 to 20 °C/min, more preferably 3 to 10 °C/min, as a specific example, 5 °C/min. Within this range, heat treatment may be performed without applying excessive force to heat treatment equipment, and application of thermal shock to positive electrode scraps may be prevented.

For example, the heat treatment may be performed for a time sufficient to thermally decompose the binder, preferably for 30 minutes or more, more preferably 30 minutes to 5 hours, as a specific example, within 30 minutes. Within this range, the binder may be sufficiently thermally decomposed, and thermal decomposition efficiency may be excellent.

The heat treatment may be performed using various types of furnaces, e.g., a box-type furnace. In addition, in consideration of productivity, the heat treatment may be performed using a rotary kiln capable of continuous treatment.

After the heat treatment, slow cooling or rapid cooling may be performed in the atmosphere.

Next, as a surface modification step, the recovered active material is washed (step S40).

In the washing process, reactants generated on the surface of the active material during the heat treatment step (step S30) are removed, thereby removing foreign substances from the surface of the recycled active material.

When performing the washing, it is important to use a basic aqueous lithium compound solution. When an aqueous sulfuric acid or hydrochloric acid solution is used, foreign substances such as fluorine (F) compounds present on the surface of the positive electrode active material may be removed. However, since transition metals such as Co and Mg present in the positive electrode active material are eluted, the performance of the recycled positive electrode active material may be deteriorated.

However, the basic aqueous lithium compound solution is safe and low-cost, and may remove a trace amount of a binder that may remain after the thermal decomposition of step S30 without loss of other elements. In addition, the basic aqueous lithium compound solution does not elute transition metals present in the positive electrode active material, and may supplement lithium that may be eluted during the washing process. Accordingly, the use of the basic aqueous lithium compound solution is highly desirable.

For example, the basic aqueous lithium compound solution contains a basic lithium compound in an amount of greater than 0 % and less than or equal to 15 %. When the basic aqueous lithium compound solution containing the basic lithium compound in a concentration exceeding the above range is used, an excess of the lithium compound may remain on the surface of the active material after washing, which adversely affects the subsequent annealing process.

Step B may be a step of, as a specific example, adding 1 to 5 g of the positive electrode active material per 100 ml of the basic aqueous lithium compound solution and performing precipitation. Within this range, positive electrode active material particles of normal size may be sufficiently precipitated, and a positive electrode active material in a fine powder state may be suspended, so that the fine powder may be efficiently separated.

The lithium compound is preferably LiOH.

In the present disclosure, unless otherwise defined, % means % by weight.

For example, the washing is performed by stirring and mixing the recovered positive electrode active material and the basic aqueous lithium compound solution. Here, the stirring is not particularly limited, and may be mechanical stirring or ultrasonic stirring.

As a specific example, the washing is performed for 10 to 20 minutes. Within this range, decrease in the capacity of a battery due to excessive elution of lithium may be prevented.

In the present disclosure, the reason for washing the recovered positive electrode active material with the basic aqueous lithium compound solution is to remove metal fluoride, such as LiF, that may exist on the surface of the recovered active material, that is, to perform surface modification. During the heat treatment of step S30, the binder and the conductive material in the active material layer are converted to CO₂ and H₂O, and are vaporized and removed. In this process, CO₂ and H₂O may react with lithium on the surface of the active material to form Li₂CO₃ and LiOH, and F present in the binder, such as PVdF, may react with lithium or other metal elements constituting the positive electrode active material to form a metal fluoride. When the metal fluoride such as LiF remains on the surface of the positive electrode active material, battery characteristics deteriorate when reused.

Next, the washed positive electrode active material is precipitated in a basic aqueous lithium compound solution (step S50).

The precipitation time may be limitedly changed within a range of 15 to 40 minutes depending on the type of the positive electrode active material. When the positive electrode active material is an NCM-based active material, the precipitation time is preferably 20 to 25 minutes.

As a specific example, the precipitated precipitate is obtained by pouring out a supernatant containing a suspended positive electrode active material in fine powder form or removing the supernatant using a liquid transfer pump or the like.

As a specific example, the obtained precipitate is dried using an oven (convection type) in air.

Next, a lithium precursor is added to the dried positive electrode active material, and annealing is performed (step S60).

Loss of lithium in the positive electrode active material occurs during preceding steps S30, S40, and S50. In step S60, the loss amount of lithium is supplemented. In addition, during the preceding steps, a deformed structure (e.g., Co₃O₄ in the case of an LCO active material) may be formed on the surface of the positive electrode active material. In step S60, the crystal structure of the positive electrode active material may be recovered through annealing, thereby improving the properties of a recycled positive electrode active material, or restoring the properties of the recycled positive electrode active material to the level of properties of a fresh positive electrode active material. Here, "fresh" is a concept opposite to "recycling", a fresh material means that the material was made for the first time, and the fresh material is the same word as "raw material" used in the examples.

As a specific example, LiOH is used as the lithium precursor.

Based on the molar ratio of lithium to other metals in a fresh positive electrode active material used in the positive electrode active material layer, the lithium precursor is preferably added in an amount corresponding to the lost lithium molar ratio. When an excess of lithium precursor is added relative to the amount of lithium lost, unreacted lithium precursor may remain in a recycled positive electrode active material, which increases resistance. Accordingly, an appropriate amount of the lithium precursor needs to be added. For example, when the molar ratio of lithium to other metals in a fresh positive electrode active material is 1, the lithium precursor may be added in an amount such that lithium is in a molar ratio of 0.001 to 0.4, preferably an amount such that lithium is in a molar ratio of 0.01 to 0.2.

As a specific example, when the lithium precursor is added at a molar ratio of 0.09 to 0.1 (based on lithium metal), which is a ratio lost compared to a lithium content in a fresh positive electrode active material, based on ICP analysis results, the capacity may be increased to a level equivalent to that of the fresh positive electrode active material. Here, the ICP analysis results have an error value of about ±0.02.

For example, the annealing may be performed in air at 400 to 1,000 °C, preferably at 600 to 900 °C. In this case, the temperature should be determined within a limited range according to the type of the lithium precursor.

The annealing temperature is preferably a temperature exceeding the melting point of the lithium precursor. However, since performance degradation occurs due to thermal decomposition of the positive electrode active material at a temperature exceeding 1,000 °C, the annealing temperature should not exceed 1,000 °C. When Li₂CO₃ is used as the lithium precursor, the annealing temperature is preferably 700 to 900 °C, more preferably 710 to 780°C, most preferably 750 to 780 °C. In addition, when LiOH is used as the lithium precursor, the annealing temperature is preferably 400 to 600 °C, more preferably 450 to 480 °C, most preferably 470 to 480 °C.

For example, the annealing time is preferably 1 to 15 hours, more preferably 4 to 6 hours. When the annealing time is increased, a crystal structure may be sufficiently recovered, but even long-term annealing does not significantly affect performance. In this case, the same or similar equipment as in step S30 of performing heat treatment may be used as the annealing equipment.

The annealing step is safe and low-cost, and restores the battery characteristics of the recycled positive electrode active material by restoring the crystal structure thereof, i.e., improving the crystallinity thereof.

The recycled positive electrode active material obtained through the steps of recycling a positive electrode active material described above has a particle size distribution similar that of a fresh positive electrode active material, and carbon components generated by carbonization of a binder or a conductive material do not remain on the surface of the recycled positive electrode active material. Thus, the recycled positive electrode active material may be used alone without additional treatment or mixed with a fresh active material to manufacture a positive electrode.

Next, as an optional step, the surface of the annealed positive electrode active material may be coated (step S70).

For example, in the surface coating, the surface is coated with a coating agent containing metals or carbon in a solid or liquid phase and heat-treated at 100 to 1,200 °C. When the heat treatment temperature is less than 100 °C, formation of a surface protection layer by the dissimilar metals may not occur. When the heat treatment temperature exceeds 1,200 °C, due to thermal decomposition of the positive electrode active material, battery performance may deteriorate.

Specifically, when the positive electrode active material is coated with a metal oxide such as B, W, and B-W and heat-treated, a lithium boron oxide layer may be formed on the surface of the active material, and this layer acts as a surface protection layer.

The surface coating may be performed using a solid-phase or liquid-phase method, as a specific example, mixing, milling, spray drying, or grinding.

For reference, when the molar ratio of lithium to other metals in the positive electrode active material in the previous annealing step S60 is 1:1, lithium in the positive electrode active material reacts with the coating agent, and the molar ratio of lithium to other metal in the positive electrode active material is less than 1:1. In this case, the capacity of a battery may not be fully expressed. Accordingly, to replenish lithium depleted in step S60, lithium is added so that the molar ratio of lithium to other metals in the positive electrode active material is 1:1. In addition, an excess of lithium is added so that lithium is contained in a greater molar ratio of 0.0001 to 0.1 compared to other metals in the positive electrode active material. Then, in the surface coating of step S70, the molar ratio of lithium to other metals in the positive electrode active material becomes 1:1, and furthermore, a surface protective layer is formed.

Specifically, in step S60, lithium added in an excess amount of about 0.0001 to 0.1 molar ratio reacts with metal oxides such as B, W, and B-W in step S70. In this case, the molar ratio of lithium to other metals in the positive electrode active material does not decrease, showing a molar ratio of less than 1:1, so that no capacity degradation occurs.

### Recycled positive electrode active material

A recycled positive electrode active material of the present invention is prepared by the method of recycling a positive electrode active material described above. In this case, fine powder generated from the recycled positive electrode active material may be removed, thereby greatly improving the rate performance of a battery.

In addition, the recycled positive electrode active material of the present invention preferably includes a compound represented by Chemical Formula 1 below.

[Chemical Formula 1] LiₐNiₓMn_{y}Co_{z}M_{w}O_{2+δ}

In Chemical Formula 1, M includes one or more selected from the group consisting of B, W, Al, Ti, and Mg; 1<a≤1.1, 0<x<0.95, 0<y<0.8, 0<z<1.0, 0≤w≤0.1, -0.02≤δ≤0.02, and x+y+z+w=1; the particle size distribution of the recycled positive electrode active material exhibits a bimodal or multimodal pattern, wherein, in the multimodal pattern, a peak corresponding to a small-sized particle is lower than a peak corresponding to a large-sized particle; and the content of fluorine (F) is 5,000 ppm or less. In this case, electrochemical performance, resistance properties, and capacity properties may be excellent.

The content of fluorine (F) may be preferably 500 ppm or less, more preferably 100 ppm or less, still more preferably 30 ppm or less. Within this range, excellent resistance properties and capacity properties may be implemented.

The recycled positive electrode active material may be preferably coated with a coating agent containing metals or carbon. In this case, without change in the chemical and physical properties of the positive electrode active material, the structural stability of the positive electrode active material may be improved, thereby improving electrochemical properties such as rate performance, lifespan characteristics, and capacity. In addition, substitution with heterogeneous elements occurs on the surface of the positive electrode active material, so that the amount of residual lithium is reduced and the pH is reduced, thereby improving physicochemical properties.

Description of the recycled positive electrode active material of the present invention may include all of the description of the method of recycling a positive electrode active material described above, and thus repeated description is omitted in this specification.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

### Example 1

After blanking a positive electrode plate, discarded positive electrode scraps (current collector: aluminum foil, positive electrode active material: NCM-based lithium composite transition metal oxide) were crushed, and the crushed scraps were heat-treated a 550 °C for 30 minutes in air to remove a binder and a conductive material and separate a current collector and a positive electrode active material. Through these processes, the positive electrode active material was recovered. At this time, temperature was increased to the heat treatment temperature at a temperature increasing rate of 5 °C/min.

To remove foreign substances such as metal fluorine (e.g., LiF) present on the surface thereof, 15 g of the recovered positive electrode active material was immersed in 450 ml of an aqueous LiOH solution having a concentration of 1 % by weight, and stirring was performed for 10 minutes for washing. After washing, stirring was stopped while the positive electrode active material was dispersed, and the solution was left for 20 minutes for precipitation. Then, a supernatant was discarded, and a precipitate was collected. The collected precipitate was dried at 100 °C for 12 hours.

Based on the molar ratio of lithium to other metals in the positive electrode active material as a raw material, LiOH(a lithium precursor), was added to the dried precipitate in an amount such that the molar ratio of lithium was 0.11. Then, annealing was performed at 750 °C for 5 hours in air to obtain a recycled positive electrode active material. At this time, the molar ratio of lithium to other metals in the positive electrode active material was measured by ICP analysis.

### Comparative Example 1

A recycled positive electrode active material was prepared in the same manner as in Example 1, except that solids were obtained instead of a precipitate by performing filtering without giving precipitation time.

### Comparative Example 2

A recycled positive electrode active material was prepared in the same manner as in Example 1, except that precipitation time was extended to 1 hour.

### Reference Example

Instead of a recycled active material, a fresh NCM-based lithium composite transition metal oxide (NCM651520) was used.

### [Test Examples]

The properties of the recycled positive electrode active materials prepared in Example 1 and Comparative Examples 1 and 2 and Reference Example were measured by the following method, and the results are shown in Table 1 and FIGS. 2 to 5 below.
* Surface conditions: Surface conditions were evaluated by observing the image of a surface taken using an SEM device (See FIG. 2 below). In this case, the image may be obtained using s-4200 manufactured by HITACHI. However, there was no deviation according to the measuring device or method.
* Particle size distribution: Particle size distribution was measured using a particle size analyzer. In this case, a Horiba LA 950V2 was used as the particle size analyzer. However, there was no deviation according to the measuring device or method.
* ICP analysis: Using an ICP analysis apparatus, a residual amount of LiF, a ratio of lithium to other metals in an active material, and a content (mg/kg) of a specific element such as F, B, and W were measured. In this case, a general ICP analyzer frequently used in laboratories may be used. However, there was no deviation according to the measuring device or method.
* Evaluation of cell: 96 % by weight of a recycled or fresh positive electrode active material, 2 % by weight of carbon black as a conductive material, and 2 % by weight of PVdF as a binder were prepared and mixed in an NMP to obtain slurry, and aluminum foil was coated with the slurry to manufacture a positive electrode. Then, a cell (Coin Half Cell, CHC) was manufactured. Then, electrochemical performance was evaluated at a voltage of 3 to 4.5V.

**[Table 1]**

| Classification | Example | Comparative Examples | | Reference Example |
|---|---|---|---|---|
| | 1 | 1 | 2 | |
| F content (mg/kg) | 315 | 430 | 318 | ND |
| B content (mg/kg) | 648 | 665 | 653 | 456 |
| Ratio of lithium to other metals in active material | 1.06 | 1.08 | 1.05 | 1.06 |

| | | | | |
|---|---|---|---|---|
| * ND means measurement at 30 ppm or less. | | | | |

As shown in Table 1, in the case of the recycled positive electrode active material (Example 1) according to the present invention, compared to Comparative Examples 1 and 2 without the precipitation process of the present invention, the content of impurities (F content) is low, and the ratio of lithium to other metals in the active material is the same as that of the fresh positive electrode active material (Reference Example), indicating that the overall physical properties are excellent.

FIG. 2 below includes scanning electron microscope (SEM) images of the recycled positive electrode active materials prepared in Example 1 (A), Comparative Example 1 (B), and Comparative Example 2 (C) and the positive electrode active material of Reference Example (D).

In FIG. 2, the image (A) is a SEM image of the recycled positive electrode active material that has been subjected to the precipitation process of the present invention in Example 1. Compared with the image (B) of Comparative Example 1 without the precipitation process, it can be seen that fine powder is significantly removed through the recycled positive electrode active material. In addition, as shown in the image (C) of Comparative Example 2 in which a precipitation time longer than the precipitation time according to the present invention is used, since a positive electrode active material in fine powder form is also precipitated, fine powder is observed in the recycled positive electrode active material at a level similar to that of Comparative Example 2. The image (D) is an SEM image of the positive electrode active material of Reference Example. The surface conditions shown in the image (D) are similar to those of the image (A) of Example 1. Based on these results, it can be confirmed that, when a recycled positive electrode active material is prepared by applying the precipitation process according to the present invention, fine powder is sufficiently removed, showing surface conditions similar to those of the fresh positive electrode active material.

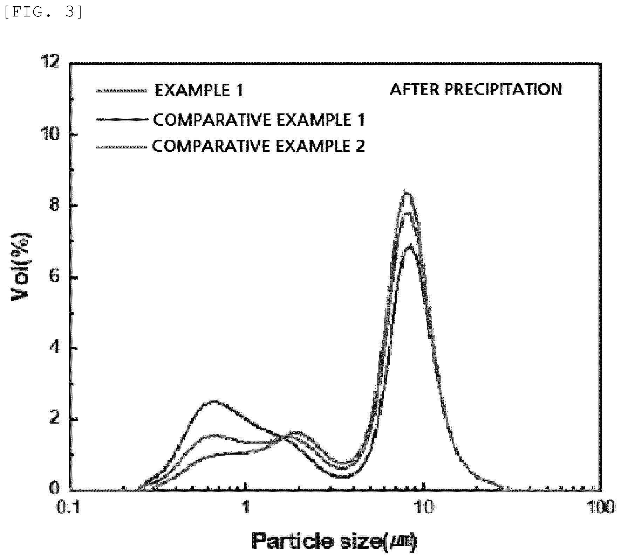

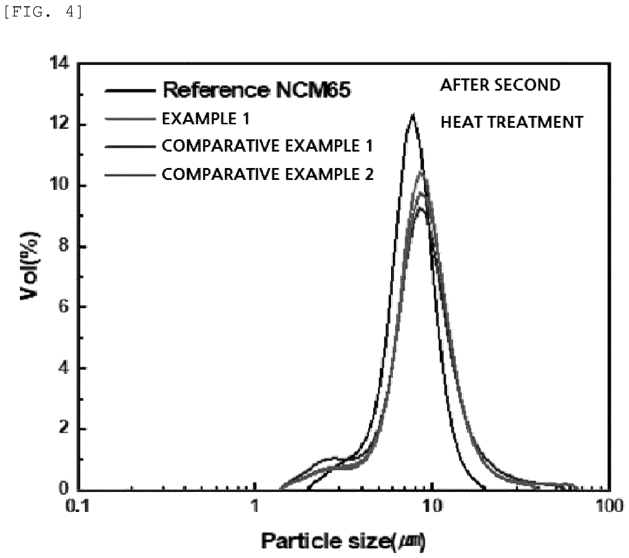

FIGS. 3 and 4 below are graphs showing particle size distribution of a precipitate or solids obtained after precipitating or washing in Example 1 and Comparative Examples 1 and 2, respectively, and graphs comparing the particle size distribution of a recycled positive electrode active material obtained after annealing and a positive electrode active material of Reference Example (Reference NCM65) . For reference, in FIGS. 3 and 4, the horizontal axis is particle size (um), and the vertical axis is volume (%)_{.}

Referring to FIG. 3, in the case of Example 1 in which a precipitate was obtained by the precipitation process according to the present invention, compared to Comparative Examples 1 and 2 in which solids or a precipitate was obtained without the precipitation process, it can be seen that fine powder near 1 um is greatly reduced.

In addition, referring to FIG. 4, in the case of the recycled positive electrode active material of Example 1 that has been subjected to the precipitation and annealing processes according to the present invention, unlike the recycled positive electrode active materials of Comparative Examples 1 and 2 prepared without the precipitation and annealing processes, a particle size distribution similar to that of the fresh positive electrode active material (reference NCM65) of Reference Example is exhibited. Based on these results, it can be confirmed that, when a recycled positive electrode active material is prepared by applying the precipitation and annealing processes according to the present invention, the recycled positive electrode active material has a particle size distribution similar to that of a fresh positive electrode active material.

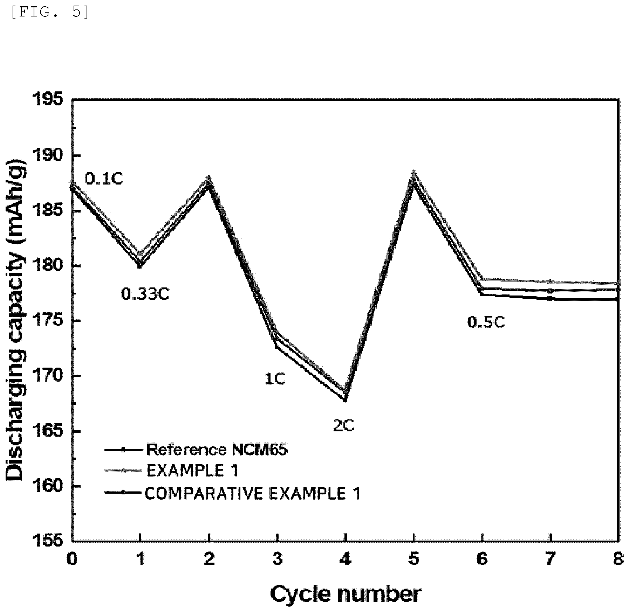

FIG. 5 below shows cell evaluation results for the recycled positive electrode active materials of Example 1 and Comparative Example 1 and the positive electrode active material of Reference Example (Reference NCM65), and is a graph showing rate performance depending on the number of cycles. In the graph, rate performance is shown through capacity evaluated according to the number of cycles at different currents. For reference, in the graph of FIG. 5, the horizontal axis is the number of cycles, and the vertical axis is capacity.

Referring to FIG. 5, the recycled positive electrode active materials prepared in Example 1 and Comparative Examples 1 and 2 all exhibit higher rate performance than the positive electrode active material (Reference NCM65) of Reference Example. It is inferred that these results were obtained because crystallinity was improved compared to the fresh positive electrode active material of Reference Example only by performing the calcination and annealing processes according to the present invention.

Next, comparing the recycled positive electrode active material of Example 1 and the recycled positive electrode active materials of Comparative Examples 1 and 2, it is inferred that rate performance was greatly improved by effectively removing fine powder by applying the precipitation process according to the present invention when preparing the recycled positive electrode active material of Example 1.

### [Description of Symbols]

10: CURRENT COLLECTOR
20: ACTIVE MATERIAL LAYER
30: POSITIVE ELECTRODE SHEET
40: POSITIVE ELECTRODE PLATE
50: POSITIVE ELECTRODE SCRAPS

## Claims

1. A method of recycling a positive electrode active material, comprising:
step A of recovering a positive electrode active material by heat-treating a waste positive electrode comprising a current collector and a positive electrode active material layer coated thereon at 300 to 650 °C in air;
step B of precipitating the recovered positive electrode active material in a basic aqueous lithium compound solution for 10 to 40 minutes;
step C of removing a supernatant after the precipitation step and obtaining a precipitate; and
step D of adding a lithium precursor to the precipitate and performing annealing at 400 to 1,000 °C in air.

2. The method according to claim 1, wherein the positive electrode active material layer of step A comprises a positive electrode active material, a binder, and a conductive material.

3. The method according to claim 1, wherein the positive electrode active material is represented by Chemical Formula 1 below:
[Chemical Formula 1] LiₐNiₓMn_{y}Co_{z}M_{w}O_{2+δ},
wherein M comprises one or more selected from the group consisting of B, W, Al, Ti, and Mg, 1<a≤1.1, 0<x<0.95, 0<y<0.8, 0<z<1.0, 0≤w≤0.1, -0.02≤δ≤0.02, and x+y+z+w=1.

4. The method according to claim 1, wherein, in step B, the positive electrode active material is precipitated by adding 0.1 to 100 g of the positive electrode active material per 100 ml of the basic aqueous lithium compound solution.

5. The method according to claim 1, wherein the basic aqueous lithium compound solution of step B comprises a basic lithium compound in an amount of greater than 0 % by weight and less than or equal to 15 % by weight.

6. The method according to claim 1, wherein, in step B, before the recovered positive electrode active material is precipitated, the recovered positive electrode active material and the basic aqueous lithium compound solution are stirred to wash the recovered positive electrode active material.

7. The method according to claim 6, wherein the stirring is performed within a week.

8. The method according to claim 1, wherein a particle size distribution of the precipitate of step C exhibits a bimodal or multimodal pattern, wherein, in the multimodal pattern, a peak corresponding to a small-sized particle is lower than a peak corresponding to a large-sized particle.

9. The method according to claim 1, wherein, in the precipitate of step C, a total amount of particles having a particle size of 1 µm or less is 5 % by volume or less.

10. The method according to claim 1, wherein step C comprises a step of drying the obtained precipitate.

11. The method according to claim 1, wherein the lithium precursor of step D comprises one or more selected from the group consisting of LiOH, Li₂CO₃, LiNO₃, and Li₂O.

12. The method according to claim 1, wherein the lithium precursor of step D is added in an amount corresponding to a difference in lithium content between a molar ratio of lithium in the positive electrode active material of step A and a molar ratio of lithium in the precipitate in which an amount of lithium is reduced.

13. The method according to claim 1, wherein the lithium precursor of step D is added in an amount capable of providing 1 to 40 mol% of lithium based on 100 mol% in total of lithium in the positive electrode active material of step A.

14. The method according to claim 1, wherein, in step D, the annealing temperature is a temperature exceeding a melting point of the lithium precursor.

15. The method according to claim 1, comprising step F of coating the annealed precipitate of step D with a coating agent containing metal or carbon, and then heat-treating the precipitate at 100 to 1,200 °C.

16. A recycled positive electrode active material prepared by the method according to claims 1 to 15.

17. A recycled positive electrode active material, comprising a compound represented by Chemical Formula 1 below:
[Chemical Formula 1] LiₐNiₓMn_{y}Co_{z}M_{w}O_{2+δ},
wherein M comprises one or more selected from the group consisting of B, W, Al, Ti, and Mg; 1<a≤1.1, 0<x<0.95, 0<y<0.8, 0<z<1.0, 0≤w≤0.1, -0.02≤δ≤0.02, and x+y+z+w=1; a particle size distribution of the recycled positive electrode active material exhibits a bimodal or multimodal pattern, wherein, in the multimodal pattern, a peak corresponding to a small-sized particle is lower than a peak corresponding to a large-sized particle; and a content of fluorine (F) is 5,000 ppm or less.

18. The recycled positive electrode active material according to claim 17, wherein the recycled positive electrode active material has a surface coated with a coating agent containing metals or carbon.
